(19) Europäisches Patentamt
European Patent Office
Office européen des brevets

(11) Veröffentlichungsnummer: **0 233 545**
**A2**

(12) **EUROPÄISCHE PATENTANMELDUNG**

(21) Anmeldenummer: **87101472.6**

(51) Int. Cl.4: **G01N 21/88**

(22) Anmeldetag: **04.02.87**

(30) Priorität: **10.02.86 DE 3604111**

(43) Veröffentlichungstag der Anmeldung:
**26.08.87 Patentblatt 87/35**

(84) Benannte Vertragsstaaten:
**DE FR GB IT**

(71) Anmelder: **Nukem GmbH**
**Rodenbacher Chaussee 6 Postfach 11 00 80**
**D-6450 Hanau 11(DE)**

(72) Erfinder: **Maurer, Dr. Albrecht**
**Hans-Memling-Strasse 5**
**D-6453 Seligenstadt(DE)**
Erfinder: **Fabian, Josef**
**Auf der Aue 6**
**D-6450 Hanau(DE)**

(74) Vertreter: **Stoffregen, Hans-Herbert, Dr. Dipl.-Phys. et al**
**Patentanwälte Strasse & Stoffregen**
**Salzstrasse 11a Postfach 2144**
**D-6450 Hanau/Main 1(DE)**

(54) **Verfahren und Vorrichtung zum Erkennen von Fehlerstellen in einem Gegenstand.**

(57) Gegenstand der Erfindung ist ein Verfahren und eine Vorrichtung zum Erkennen von Fehlerstellen in oder an einem Gegenstand, dessen jeweilige Gestalt (1) meßtechnisch erfaßt wird. Die Gestalt (1) wird mit einer Mustergestalt (2) verglichen. Hierzu werden zuerst ein Punkt (3) und je eine Linie (4, 5) der jeweiligen Gestalt und der Mustergestalt in einem Koordinatensystem durch Verschiebung der Gestalt - (1) oder Mustergestalt (2) zur Deckung gebracht. Danach werden in Teilbereichen (6, 7) des Koordinatensystems liegende Teilgestalten (8) und Teilmustergestalten (9) so lange relativ zueinander verschoben, bis ein maximaler Überdeckungsgrad festgestellt wird. Anschließend werden die nicht überdeckbaren Stellen der Teilgestalten als Fehlerstellen geprüft.

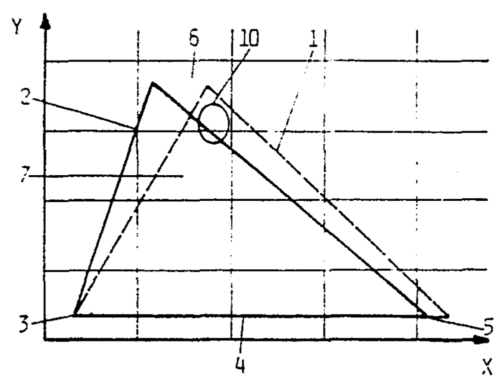


FIG. 1

EP 0 233 545 A2

## Verfahren und Vorrichtung zum Erkennen von Fehlerstellen in einem Gegenstand

Die Erfindung bezieht sich auf ein Verfahren und eine Vorrichtung zum Erkennen von Fehlerstellen in oder an einem Gegenstand, dessen jeweilige Gestalt meßtechnisch erfaßt und mit einer Mustergestalt verglichen wird, um die auf Fehlerstellen beruhenden Unterschiede der beiden Gestalten festzustellen.

Eine fehlerfreie Beschaffenheit von technischen Gegenständen ist für viele Einsatzarten aus Sicherheitsgründen notwendig. Mechanisch beanspruchte Konstruktionsteile dürfen häufig keine Gefügefehler aufweisen, damit sie den im Betrieb vorkommenden Beanspruchungen standhalten können. Die Gegenstände werden deshalb vielfach sowohl nach der Herstellung als auch nach einer mehr oder weniger langen Betriebszeit auf Fehler geprüft. Um den Aufwand für die Prüfung zu reduzieren, ist es günstig, die Gegenstände im montierten Zustand zu prüfen. Eine Möglichkeit zur Feststellung von Fehlern in Gegenständen ist der Vergleich ihrer Gestalt, worunter nicht nur die äußere Form sondern nach das Gefüge zu verstehen ist, mit einer Mustergestalt, die einem fehlerfreien Gegenstand entspricht und durch meßtechnische Erfassung eines solchen erhalten wurde. Häufig stimmt die aktuelle Form (Ist-Form) eines Gegenstandes in den äußeren Geometrien mit einer Musterform oder einem -bild nicht überein, da jenes z.B. konstruktionsbedingt instabil ist und daher z.B. während der Prüfung verformt ist. Um jedoch feststellen zu können, ob der Gegenstand im Vergleich zu der Vorgabe (Musterbild) die erforderliche Güte aufweist, müßte versucht werden, zunächst von der Geometrie her eine Deckungsgleichheit zu erzielen, um dann Meßwerte gleicher Koordinaten zu vergleichen und zu überprüfen, ob nicht zulässige Abweichungen, die auf Fehler schließen lassen, vorliegen oder nicht.

Der Erfindung liegt nun die Aufgabe zugrunde, ein Verfahren zur Erkennung von Fehlerstellen in oder an einem Gegenstand, dessen jeweilige Gestalt mit einer Mustergestalt (Vorlage) verglichen wird (wobei jedoch während einer Messung die aktuelle Geometrie des Gegenstandes von der Vorlage abweichen kann) dahingehend weiterzuentwickeln, daß trotz nicht auf Fehlerstellen beruhenden Unterschieden in den Gestalten Fehlerstellen erkannt werden können. Mit anderen Worten sollen trotz Gestaltsunterschieden zwischen Gegenstand und Vorlage echte Fehlerstellen erkannt werden, nämlich dann, wenn der jeweilige Gegenstand aufgrund von z.B. mechanischen Beanspruchungen, die bei der meßtechnischen Erfassung vorliegen, eine Geometrie aufweist, die von der der zu berücksichtigenden Vorlage abweicht.

Die Aufgabe wird erfindungsgemäß dadurch gelöst, daß die von einer Meßeinrichtung zu den verschiedenen Stellen des Gegenstands erhaltenen Meßwerte in auf ein Koordinatensystem bezogene Speicherzellen eines Speichers abgelegt werden, daß die der Mustergestalt entsprechenden Daten in auf das gleiche Koordinatensystem bezogenen Speicherzellen eines Speichers abgelegt sind, daß die Meßwerte auf die der Mustergestalt entsprechenden Daten durch Vergleich des Inhalts einander im Koordinatensystem entsprechender Speicherzellen und anschließende Umspeicherung derart im Speicher ausgerichtet werden, daß beim Gegenstand und bei der Mustergestalt, die einer an der gleichen Stelle angeordneten Ecke und längs einer an der gleichen Stelle verlaufenden Kante entsprechenden Meßwerte und Daten übereinstimmen, daß danach für jeweils gegenüber der Kante die gleichen Koordinatenwerte aufweisende Teilbereiche des Gegenstands und der Mustergestalt die Inhalte der die Meßwerte enthaltenden Speicherzellen und der die Daten enthaltenden Speicherzellen miteinander verglichen und durch Umspeicherung der Meßwerte derart aufeinander ausgerichtet werden, daß sich minimale Abweichungen ergeben und daß die Inhalte der die abweichenden Meßwerte enthaltenden Speicherzellen auf für Fehler typische Merkmale geprüft werden, wobei bei Fehlern eine Meldung hervorgerufen wird. Durch das vorstehend beschriebene Verfahren werden die einzelnen Teile der jeweiligen Gestalt mit Teilen der Mustergestalt zur Deckung gebracht (Vergleich Ist-Gegenstand mit Soll-oder Mustergestalt). Hierbei wird davon ausgegangen, daß die Teilgestalten im fehlerfreien Zustand praktisch nicht oder nur vernachlässigbar wenig voneinander abweichen. Dies ist beispielsweise bei Bauteilen wie Flugzeugteilen, die aufgrund mechanischer Beanspruchungen elastische Formänderungen aufweisen, immer der Fall. Die oben beschriebene Methode ist daher zumindest bei Gegenständen anwendbar, deren Gestaltsänderungen nach dem Hookschen Gesetz bestimmt werden können. Stellen, die sich nicht zur Deckung bringen lassen, werden durch die Methode auf einfache Weise festgestellt. Aufgrund ihrer typischen Form können Fehlerstellen erkannt werden. Unter Umständen kann es auch zweckmäßig sein, die Bereiche der Gegenstände mit Fehlerstellen noch nach einem oder mehreren Prüfverfahren zu untersuchen, um weitere Einzelheiten des jeweils gefundenen Fehlers festzustellen.

Bei Abschnitten von gleichbleibender Stärke des Gegenstands und der Mustergestalt ist es günstig, zuerst einen Punkt und je eine Linie der jeweiligen Gestalt und der Mustergestalt in einem Koordinatensystem durch Verschiebung der Gestalt oder der Mustergestalt zur Deckung zu bringen und danach in Teilbereichen des Koordinatensystems liegende Teilgestalten und Teilmustergestalten so lange relativ zueinander zu verschieben, bis ein maximaler Überdeckungsgrad festgestellt wird, wobei die nicht überdeckbaren Stellen der Teilgestalten auf Fehlerstellen überprüft werden. Diese Methode eignet sich insbesondere für Gestalten, die in einer Koordinatenrichtung eine gleichbleibende Stärke haben bzw. für die verschiedenen Abschnitte, die je in der Stärke gleich sind.

Bei einer zweckmäßigen Ausführungsform werden die jeweilige Gestalt und die Mustergestalt in einem karthesischen Koordinatensystem zur Deckung gebracht, wobei längs Geraden verlaufende Stellen der Teilgestalten und Teilmustergestalten durch Vergleich der Absolutwerte von mit und ohne relative Verschiebung der Teilgestalten und Teilmustergestalten gewonnenen Differenzen der Identifizierungsgrößen der Teilgestalten und Teilmustergestalten bei minimalen Absolutwerten zur Deckung gebracht werden. Bei dieser Ausführungsform werden Verschiebungen längs Geraden durchgeführt, die vorzugsweise parallel zu den Koordinatenachsen verlaufen. Der Rasterabstand der Geraden wird zweckmäßigerweise so gewählt, daß zwischen benachbarten Geraden die Umrisse der miteinander zu vergleichenden Gestaltsabschnitte praktisch nicht voneinander abweichen. Der für die Durchführung der Überdeckung beider Gestalten notwendige Zeitaufwand läßt sich hierdurch vermindern.

Vorzugsweise wird das Integral des Absolutwertes ohne die Verschiebung der jeweiligen Teilgestalt gegenüber der Teilmustergestalt mit dem Integral des jeweiligen Absolutwertes bei einer Verschiebung der jeweiligen Teilgestalt gegenüber der Teilmustergestalt auf eine Zunahme oder Abnahme hin geprüft, wobei die Verschiebung der jeweiligen Teilgestalt gegenüber der Teilmustergestalt in aufeinanderfolgenden Schritten mit dem Vergleich der Absolutwerte fortgesetzt wird, bis ein Minimum des Absolutwertes festgestellt wird. Auf diese Weise kann das Minimum des Absolutwertes in wenigen Verschiebeschritten erkannt werden. Der Zeitaufwand für die Fehlererkennung wird damit herabgesetzt.

Weitere Ausgestaltungen des erfindungsgemäßen Verfahrens sind in den Ansprüchen 4 und 5 beschrieben.

Eine vorteilhafte Vorrichtung zur Durchführung der in den Ansprüchen 1 bis 5 beschriebenen Verfahren ist im Anspruch 6 angegeben.

Die Erfindung wird im folgenden an Hand eines in einer Zeichnung dargestellten Ausführungsbeispiels näher beschrieben, aus dem sich weitere Einzelheiten, Merkmale und Vorteile ergeben.

Es zeigen:

Fig. 1 in einer Koordinatenebene eine Gestalt eines Gegenstandes und eine Mustergestalt,

Fig. 2 einen Teilbereich der Koordinatenebene mit einer Teilgestalt und einer Teilmustergestalt,

Fig. 3a bis 3d die längs einer Geraden des Teilbereichs gemäß Fig. 2 vorkommenden Amplituden von Identifizierungsgrößen für die Mustergestalt in Ordinatenrichtung in Abhängigkeit von ihrer Lage in Abszissenrichtung,

Fig. 4a bis 4d die längs der Geraden des Teilbereichs gemäß Fig. 2 vorkommenden Amplituden von Identifizierungsgrößen für die jeweilige Gestalt in Ordinatenrichtung in Abhängigkeit von ihrer Lage in Abszissenrichtung für verschiedene Verarbeitungsschritte,

Fig. 5a bis 5d die Differenzen zwischen den Amplituden der Identifizierungsgrößen einer Teilgestalt und einer Teilmustergestalt in Ordinatenrichtung in Abhängigkeit von der Lage in Abszissenrichtung für vier Verarbeitungsschritte,

Fig. 6a bis 6d die Absolutwerte der Differenzen gemäß Fig. 5a bis 5d in Ordinatenrichtung in Abhängigkeit von der Lage in Abszissenrichtung für vier Verarbeitungsschritte,

Fig. 7 das Ergebnis der Überdeckung einer Teilgestalt mit einer Teilmustergestalt bei einem Fehler im Gegenstand,

Fig. 8 ein Übersichtsschaltbild einer Vorrichtung zum Erkennen von Fehlerstellen in einem Gegestand,

Fig. 9a bis 9c verschiedene Anordnungen von Ultraschallprüfköpfen, die bei der Vorrichtung gemäß Fig. 8 einsetzbar sind.

Von einem Gegenstand (28), z.B. einem Flugzeugteil, mit Schenkellängen von z.B. 3m x 8m wird meßtechnisch die Gestalt (1) gewonnen. Die durch die meßtechnische Erfassung erhaltenen Werte können vorzugsweise digitalisiert und abgespeichert werden. Eine Mustergestalt (2), die einem fehlerfreien Gegenstand gleicher Form und Struktur unter bestimmten Gegebenheiten entspricht, ist ebenfalls vorzugsweise durch digitale Werte abgespeichert. Die Gegebenheiten können z.B. fehlende äußere Beanspruchungen sein. Die Gestalt (1) ist in Fig. 1 gestrichelt dargestellt.

Aufgrund von bei der meßtechnischen Erfassung der Gestalt auf den Gegenstand einwirkenden Beanspruchungen weicht die Gestalt (1) von der Mustergestalt (2) ab. Der Gegenstand ist z.B. ein Bautel eines Flugzeugs. Dieses Bauteil, z.B. ein Träger, wird in montiertem Zustand, d.h. mit elastischen Verformungen, geprüft. Wegen der Abweichungen der Gestalt (1) von der Mustergesalt (2) ist zunächst keine Überdeckung zwischen den beiden Gestalten möglich. Bei der Gestalt (1) und der Mustergestalt (2) handelt es sich zweckmäßigerweise um C-Bilder eines nach dem Ultraschallverfahren gemessenen Gegenstandes. Die Gestalt (1) und die Mustergestalt (2) werden im folgenden daher auch als Bild und Musterbild bezeichnet.

Grundsätzlich wird zur Erkennung von Fehlern in oder an dem Gegenstand bzw. der Gestalt das folgende Verfahren durchgeführt. Die von einer Meßeinrichtung erhaltenen Meßwerte werden in auf ein Koordinatensystem bezogenen Speicherzellen eines Speichers abgelegt. Mit der Meßeinrichtung werden die für eine Prüfung maßgebenden physikalischen Eigenschaften des Gegenstandes bzw. der Gestalt erfaßt. Die Meßeinrichtung und der Speicher sind unten eingehend erläutert. Die der Mustergestalt (2) entsprechenden Daten sind in auf das gleiche Koordinatensystem bezogenen Speicherzellen eines Speichers abgelegt. Die Meßwerte in den Speicherzellen werden anschließend auf die der Mustergestalt (2) entsprechenden Daten ausgerichtet, indem die Inhalte einander im Koordinatensystem entsprechender Speicherzellen zuerst miteinander verglichen werden. Der Vergleich hat den Zweck, die jeweils bestimmten Grenzen der Gestalt (1) und der Mustergestalt (2) entsprechenden Werte zu finden. Es handelt sich um eine Ecke und eine Kante, die bei der Gestalt (1) und der Mustergestalt (2) in gleicher Weise vorkommen. Die Umspeicherung soll die Meßwerte der Gestalt (1) und die Daten der Mustergestalt (2) so gruppieren, daß die Ecke und die Kante korrespondierenden Speicherzellen in den Speichern entsprechen. Anschließend werden Teilbereiche der Gestalt (1) und der Mustergestalt (2) ausgewählt, die in bezug auf die Ecke und die Kante die gleichen Koordinatenwerte aufweisen. Die Inhalte der diesen Teilbereichen entsprechenden Speicherzellen für die Gestalt (1) und die Mustergestalt (2) werden miteinander verglichen. Je nach der Größe der Abweichungen werden die Meßwerte bzw. Daten so lange umgespeichert, bis sich gar keine oder minimale, d.h., durch Umspeicherung nicht mehr reduzierbare Abweichungen ergeben. Diese Abweichungen werden auf für Fehler typische Merkmale untersucht, indem insbesondere ein Vergleich mit vorgebbaren Schwellenwerte durchgeführt wird. Ergibt dieser Vergleich, daß ein Fehler in der Gestalt (1) vorliegt, dann wird eine Meldung erzeugt, die z.B. optisch und/oder akustisch sein kann. Insbesondere ist es möglich, die Fehlerstelle auf einem Bildschirm unter Bezug auf das Koordinatensystem darzustellen.

Es komme vielfach vor, daß Gegenstände oder Gestalten (1) eine gleichbleibende Stärke haben. Zumindest werden vorzugsweise nacheinander Abschnitte gleichbleibender Stärke für die Messung ausgewählt. In diesem Falle werden die Abschnitte gleicher Dicke oder Stärke auch als in einer Ebene liegende geometrische Figuren verarbeitet, die den oben erwähnten Bildern entsprechen.

Um trotz der Abweichungen des Bildes vom Musterbild Fehlerstellen im Gegenstand durch die Vergleichsmethode erfassen zu können, werden zuerst das Bild und das Musterbild an mindestens einem Punkt (3) in einem karthesischen Koordinatensystem einander überlagert. Weiterhin werden zwei äußere Linien (4), (5) der Gestellt (1) und der Mustergestalt (2) längs einer gemeinsamen Strecke einander überlagert. Diese Maßnahmen werden in einem ersten Verfahrensstadium durch relative Verschiebung zwischen Bild und Musterbild durchgeführt. Das Ergebnis zeigt Fig. 1.

Danach werden Teilbereiche gebildet, in denen Teilgestalten enthalten sind. Die in Fig. 1 durch strichpunktierte Umrandungen dargestellten Teilbereiche, von denen in Fig. 1 beispielsweise die Teilbereiche (6) und (7) bezeichnet sind, werden durch rechteckige Abschnitte gebildet, deren Seiten paarweise jeweils in den X-Y-Koordinatenachsen parallel verlaufen.

Es sind nur solche Teilbereiche von Interesse, in denen sich sowohl Teilgestalten des Gegenstandes als auch Teilmustergestalten befinden. In den Teilbereichen (6) und (7) befinden sich die Teilgestalt (8) der Gestalt (1) und die Teilmustergestalt - (9) der Mustergestalt (2). Die Teilgestalt (8) und die Teilmustergestalt (9) werden im folgenden auch als Teilbild und Teilmusterbild bezeichnet. In der Teilgestalt ist eine Fehlerstelle (10) enthalten, die in den Teilbereichen (6) und (7) liegt.

Die Teilbereiche sind so gewählt, daß die Teilbilder und Teilmusterbilder in den Bereichen praktisch die gleiche geometrische Gestalt haben. Eine gewisse Abweichung, die sich nach der Mindestgröße der zu erfassenden Fehlerstellen richtet, kann zugelassen werden. Die zulässige Abweichung sollte kleiner als die Mindestgröße der Fehlerstellen sein.

In weiteren Verfahrensschritten werden jeweils die Teilbilder und die Teilmusterbilder einander überlagert. Die Überlagerung wird im folgenden für die Teilgestalt (8) und die Teilmustergestalt (9) beschrieben.

Die Teilgestalt (8) und die Teilmustergestalt - (9) werden in den Teilbereichen (6), (7) längs Geraden (11(, (12), (13), die sich parallel zur Z-Koordinatenachse erstrecken, und längs Geraden, die sich parallel zur Y-Koordinatenachse erstrecken und nicht näher bezeichnet sind, durch relative Verschiebungen in Übereinstimmung hinsichtlich der äußeren Abmessungen gebracht. Als identifizierungsgrößen werden vorzugsweise die Amplituden von Ultraschallsignalen, die bei der Prüfung des Gegenstandes nach dem Ultraschallverfahren entstehen, verwendet. Die längs der Geraden (11), (12), (13) und der parallel zur Y-Achse verlaufenden Geraden auftretenden Amplituden der Identifi zierungsgrößen werden in Ordinatenrichtung als Funktion des Weges in X-Koordinatenrichtung für die Teilgestalt (8) und die Teilmustergestalt (9) ermittelt.

Die Fig. 3a zeigt für die Gerade (12) zwei verschiedene Amplituden (14), (15) der Teilmustergestalt (9). Das gleiche Bild der Amplituden der Teilmustergestalt (9) in Abhängigkeit von der Position der Teilmustergestalt (9) in X-Koordinatenrichtung ist als Fig. 3a bis Fig. 3d viermal nebeneinander dargestellt, um den Vergleich mit den nachfolgend beschriebenen Fig. 4 bis 6 zu erleichtern.

In Fig. 4a sind die Amplituden der Identifizierungsgröße der Teilgestalt (8) des Gegenstandes längs der Geraden (12) in Abhängigkeit von der Position der Gestalt des Gegenstandes in X-Koordinatenrichtung dargestellt. Die Teilgestalt (8) hat längs der Geraden (12) drei verschiedene Amplituden (16), (17) und (18). Die Amplituden (16) und (17) stimmen zwar je mit den Amplituden (14) und (15) überein, da sie an fehlerfreien Stellen des Gegenstandes und des Mustergegenstandes gewonnen wurden, treten jedoch an verschiedenen Stellen längs der Geraden (12) auf. Die Amplitude - (18) beruht auf der Fehlerstelle (10) im Gegenstand.

Die Amplituden (16), (17), (18) der Teilgestalt - (8) werden von den Amplituden (14), (15) der Teilmustergestalt (9) subtrahiert. Das Ergebnis der Subtraktion für die in Fig. 1 dargestellte Lage der Gestalt (1) und der Mustergestalt (2) ist in Fig. 5a dargestellt. Dieses Ergebnis wird in einen mit (19) bezeichneten Absolutwert umgeformt, der in Fig. 6a dargestellt ist. Danach wird in einem weiteren Verfahrensschritt eine erste Verschiebeoperation hinsichtlich der Lage der Amplituden (16), (17), - (18) der Teilgestalt (8) in X-Koordinatenrichtung durchgeführt. Das Ergebnis der ersten Verschiebeoperation zeigt Fig. 4b. Nach dem Ende der Verschiebeoperation wird wiederum die Differenz zwischen den Amplituden (14), (15) der Teilmustergestalt (9) und den verschobenen Amplitudenwerten gebildet. Die Differenzen sind in Fig. 5b dargestellt. Aus den Differenzen wird wiederum der mit (20) bezeichnete Absolutwert gebildet, der in Fig. 6b dargestellt ist.

Die beiden Absolutwerte (19) und (20) werden miteinander verglichen. Der Vergleich bezieht sich vorzugsweise auf die Integrale der Absolutwerte - (19), (20). Unter einem Vergleich der Absolutwerte ist im folgenden ein Vergleich der entsprechenden Integrale zu verstehen. Wenn der Absolutwert (20) größer als der Absolutwert (19) ist, wie dies aus den Fig. 6a und 6b ersichtlich ist, dann wird in einem weiteren Verfahrensschritt die Verschieberichtung umgekehrt. Die Amplituden (16), - (17),(18) der Teilgestalt (8) sind nach dem weiteren Verfahrensschritt nach links verschoben, wie dies in Fig. 4c dargestellt ist. Anschließend werden die Amplituden in ihrer verschobenen Lage von den Amplituden (14), (15) der Teilmustergestalt (9) lagerichtig subtrahiert. Die Differenzen sind in Fig. 5c dargestellt. Danach wird der Absolwert der Differenzen gebildet. Der Absolutwert ist in Fig. 6c dargestellt und mit (21) bezeichnet, Der Absolutwert (21) wird sodann mit den Absolutwerten (20) und (19) verglichen. Da der Absolutwert (21) kleiner als die Absolutwerte (20) und (19) ist, ist die Verschieberichtung zur Feststellung eines maximalen Überdeckungsgrades der Teilgestalt (8) und der Teilmustergestalt (9) richtig gewählt. Die Amplituden (16), (17), (18) werden deshalb noch ein weiteres Stück nach links in die in Fig. 4d gezeigte Position verschoben. Anschließend werden die Amplituden (16), (17), (18) entsprechend ihrer Lage in X-Koordinatenrichtung von den Amplituden (14), - (15) der Teilmustergestalt (9) lagerichtig subtrahiert. Die Differenzen sind in Fig. 5d dargestellt.

Danach wird der mit (22) bezeichnete und in Fig. 6d dargestellte Absolutwert gebildet. Da der Absolutwert (22) noch kleiner als der Absolutwert - (21) ist, wird in einer weiteren Verschiebeoperation ein neuer Absolutwert gewonnen. Falls dieser größer als der Absolutwert (22) ist, handelt es sich bei der dem Absolutwert (22) zugeordneten Verschiebelage der Amplituden (16), (17), (18) um diejenige Position, in der sich der maximale Überdeckungsgrad der Teilgestalt (8) und der Teilmustergestalt (9) längs der Geraden (12) ergibt. Da noch ein Absolutwert (22) trotz optimaler Deckung vorhanden ist, liegt eine Fehlerstelle im Gegenstand vor.

Die oben beschriebene Methode wird für die verschiedenen Geraden in den Teilbereichen (6), - (7) fortgesetzt. Wenn danach die Differenzen der längs der Geraden nach den Verschiebungen vorhandenen Amplituden auf einem Bildschirm dargestellt werden, ist nur noch die Fehlerstelle (10) sichtbar, wie dies in Fig. 7 gezeigt ist. In entsprechender Weise kann danach das gesamte C-Bild aufbereitet werden, d.h. für alle Teilbereiche werden die Differenzen an Hand korrigierter Lagekoordinaten gebildet. Es sind danach die Fehlerstellen in ihrer Gesamtheit erkennbar.

Die Lagekoordinaten der Amplituden nach Feststellung des maximalen Überdeckungsgrades werden jeweils gespeichert und als Ausgangswerte für den benachbarten Teilbereich verwendet.

Es können mit dem oben beschriebenen Verfahren vor allem Gegenstände von gleichbleibender Stärke geprüft werden. Besonders zweckmäßig ist es, mittels des Ultraschallverfahrens gewonnene C-Bilder mit entsprechenden Musterbildern zu vergleichen.

Bei der in Fig. 8 dargestellten Vorrichtung ist der Gegenstand (23) auf einer Trageinrichtung (24) z.B. befestigt. Ein Ultraschallprüfkopf (25) ist auf einem ersten Träger (26) befestigt, der längsverschieblich in einem zweiten Träger (27) gelagert ist, der ebenfalls längsverschieblich angeordnet ist. Mittels der beiden Träger (26, (27) kann der Ultraschallprüfkopf (25) längs der Abszissen-und der Ordinatenachse eines rechtwinkligen Koordinatensystems verschoben werden. Die Antriebe für die beiden Träger (26), (27) sind nicht näher dargestellt. Der Gegenstand (23) befindet sich innerhalb des vom Prüfkopf (25) mittels der Träger (26), (27) erfassbaren Bereichs. Die Antriebe für die Träger - (26), (27) werden von einem Rechner (28) gesteuert. Die Lageistwertgeber für den Ultraschallprüfkopf (25) sind ebenfalls mit dem Rechner (28) verbunden. Die Antriebe und die Lageistwertgeber sind nicht näher dargestellt. Der Ultraschallprüfkopf (25) ist an ein Ultraschallgerät (29) angeschlossen, das mit dem Rechner (28) über einen Kanal (30) verbunden ist. Mit dem Rechner - (28) sind ferner ein Massenspeicher (31), ein Bildschirm (32) und eine Eingabeeinrichtung (33) verbunden. Das Ultraschallgerät (29) wird von Rechner (28) bei der Prüfung des Gegenstandes (23) gesteuert. Die vom Ultraschallgerät (25) erzeugten Daten werden über den Kanal (30) für festgelegte Koordinatenpunkt übernommen, die von den nicht näher dargestellten Istwertgebern gemeldet werden.

Über die Eingabeeinrichtung (33) werden die Daten der Mustergestalt in den Massenspeicher - (31) eingegeben und stehen damit für die oben éber den Ultraschallprüfkopf (25) gemessenen Daten zur Verfügung.

Für die Prüfung des Gegenstandes (23) können die Ultraschallprüfköpfe verschieden angeordnet sein. Die Fig. 9a zeigt einen Sende-Empfangs-Prüfkopf, der im Abstand von Gegenstand (23) angeordnet ist, der wiederum im Abstand von einem Reflektor (35) angeordnet ist. Hiermit läßt sich eine Prüfung durch Doppeldurchschallung ausführen.

Die in Fig. 9b gezeigte Anordnung ermöglicht die Prüfung nach der Impuls-Echo-Methode. Bei der in Fig. 9c dargestellten Anordnung sind Ultraschallprüfköpfe (36), (37) beiderseits des Gegenstandes (23) längs der gleichen Achse angeordnet. Damit ist eine Prüfung nach der Einfachdurchschallung möglich.

## Ansprüche

1. Verfahren zum Erkennen von Fehlerstellen in oder an einem Gegenstand, dessen jeweilige Gestalt (1) meßtechnisch erfaßt und mit einer Mustergestalt (2) verglichen wird, um die auf Fehlerstellen beruhenden Unterschiede zwischen beiden Gestalten festzustellen,
**dadurch gekennzeichnet,**
daß die von einer Meßeinrichtung zu den verschiedenen Stellen des Gegenstands erhaltenen Meßwerte in auf ein Koordinatensystem bezogene Speicherzellen eines Speichers abgelegt werden, daß die der Mustergestalt (2) entsprechenden Daten in auf das gleiche Koordinatensystem bezogenen Speicherzellen eines Speichers abgelegt sind, daß die Meßwerte auf die der Mustergestalt (2) entsprechenden Daten durch Vergleich des Inhalts einander im Koordinatensystem entsprechender Speicherzellen und anschließende Umspeicherung derart im Speicher ausgerichtet werden, daß beim Gegenstand und bei der Mustergestalt die einer an der gleichen Stelle angeordneten Ecke und längs einer an der gleichen Stelle verlaufenden Kante entsprechenden Meßwerte und Daten übereinstimmen, daß danach für jeweils gegenüber der Kante die gleichen Koordinatenwerte aufweisende Teilbereiche des Gegenstands und der Mustergestalt die Inhalte der die Meßwerte enthaltenden Speicherzellen und der die Daten enthaltenden Speicherzellen miteinander verglichen und durch Umspeicherung der Meßwerte derart aufeinander ausgerichtet werden, daß sich minimale Abweichungen ergeben und daß die Inhalte der die abweichenden Meßwerte enthaltenden Speicherzellen auf für Fehler typische Merkmale geprüft werden, wobei bei Fehlern eine Meldung hervorgerufen wird.

2. Verfahren nach Anspruch 1,
**dadurch gekennzeichnet,**
daß bei Abschnitten von gleichbleibender Stärke zuerst ein Punkt (3) und je eine Linie (4, 5) der jeweiligen Gestalt (1) und der Mustergestalt (2) in einem Koordinatensystem durch Verschiebung der Gestalt (1) oder der Mustergestalt (2) zur Deckung gebracht werden, daß danach in den Teilbereichen (6, 7) des Koordinatensystems liegende Teilgestalten (8) und Teilmustergestalten (9) so lange relativ zueinander verschoben werden, bis ein maximaler Überdeckungsgrad festgestellt wird, und daß die nicht überdeckbaren Stellen der Teilgestalten auf Fehlerstellen überprüft werden.

3. Verfahren nach Anspruch 1 oder 2,
**dadurch gekennzeichnet,**
daß die Gestalt (1) und die Mustergestalt (2) in einem karthesischen Koordinatensystem zur Deckung gebracht werden, daß längs Geraden (11, 12, 13) verlaufende Stellen der Teilgestalten (8) und Teilmustergestalten (9) durch Vergleich der Absolutwerte von mit und ohne relative Verschiebung der Teilgestalten (8) und Teilmustergestalten (9) gewonnenen Differenzen der Identifizierungsgrößen der Teilgestalten (8) und der Teilmustergestalten - (9) bei minimalen Absolutwerten zur Deckung gebracht werden.

4. Verfahren nach Anspruch 2 oder 3,
**dadurch gekennzeichnet,**
daß das Integral des Absolutwertes ohne die Verschiebung der jeweiligen Teilgestalt (8) gegenüber der Teilmustergestalt (9) mit dem Integral des jeweiligen Absolutwertes bei einer Verschiebung der jeweiligen Teilgestalt (8) gegenüber der Teilmustergestalt (9) auf eine Zunahme oder Abnahme hin geprüft wird und daß die Verschiebung der jeweiligen Teilgestalt (8) gegenüber der Teilmustergestalt (9) in aufeinanderfolgenden Schritten mit dem Vergleich der Integrale der Absolutwerte fortgesetzt wird, bis ein Minimum des Absolutwertes festgestellt wird.

5. Verfahren nach einem der vorhergehenden Ansprüche,
**dadurch gekennzeichnet,**
daß die jeweils einem Minimum eines Absolutwertes zugeordneten Differenzen der Identifizierungsgrößen der Teilmustergestalt (9) und der Teilgestalt (8) auf einem Bildschirm dargestellt werden.

6. Verfahren nach einem der vorhergehenden Ansprüche,
**dadurch gekennzeichnet,**
daß die jeweils einem Minimum eines Absolutwertes zugeordneten Koordinatenwerte gespeichert und als Ausgangswerte für die Lage der Teilgestalt in benachbarten Teilbereichen verwendet werden.

7. Vorrichtung zur Durchführung des Verfahrens nach einem der vorhergehenden Ansprüche,
**dadurch gekennzeichnet,**
daß ein gegenüber dem zu prüfenden Gegenstand (23) in mindestens zwei zueinander rechtwinkligen Koordinatenrichtungen verschiebbarer Ultraschallprüfkopf (25) mit einem Ultraschallgerät (29) verbunden ist, an das ein mit Lageistwertgebern des Ultraschallprüfkopfes (25) verbundener Rechner (28) angeschlossen ist, der mit einem Massenspeicher (31), einem Bildschirm (32) und einer Eingabeeinrichtung (33) verbunden ist.

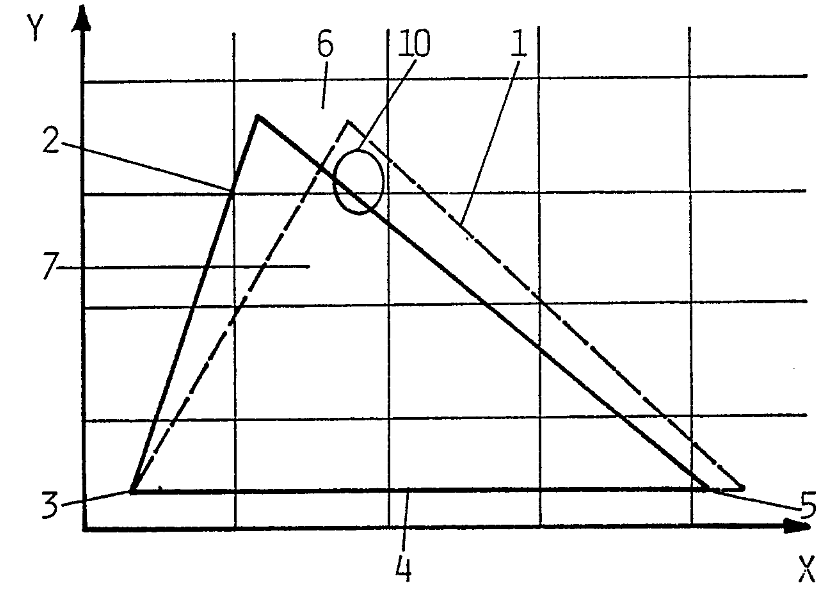


FIG. 1

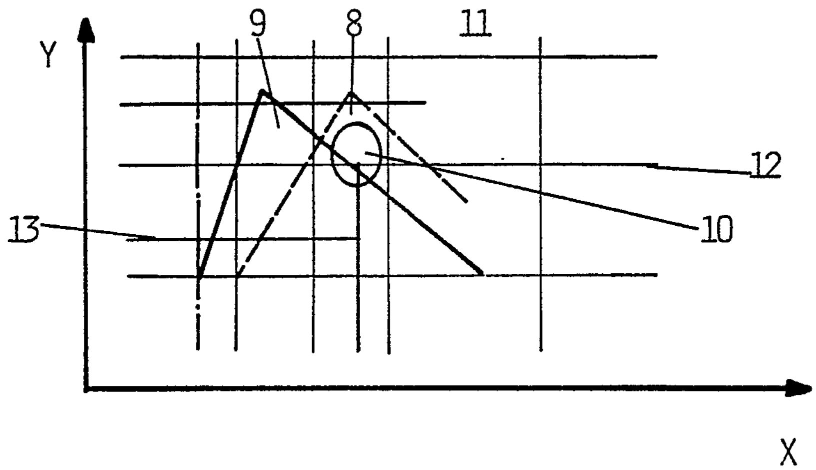


FIG. 2

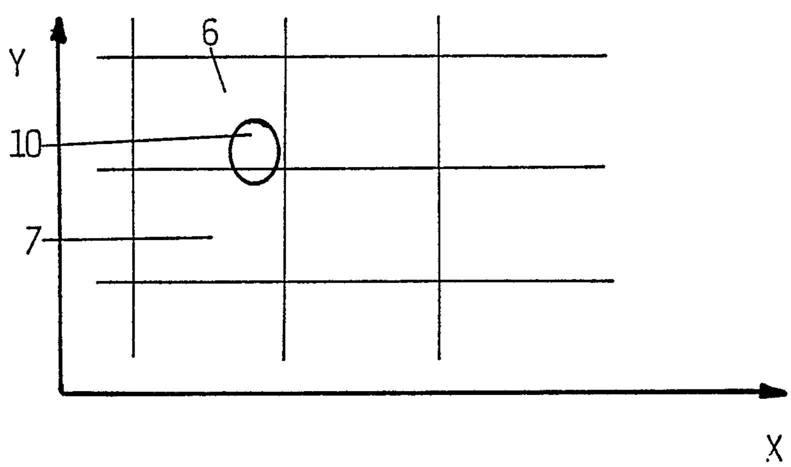


FIG. 7

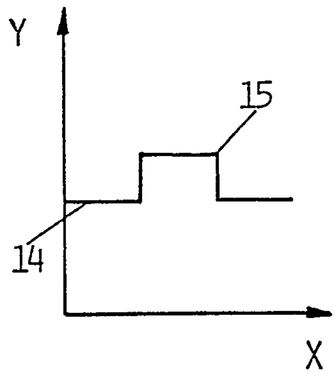


FIG.3A

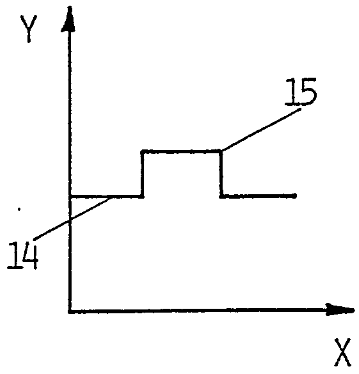


FIG.3B

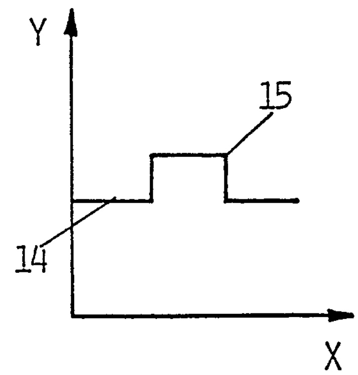


FIG.3C

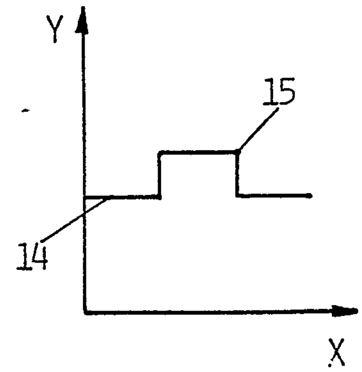


FIG.3D

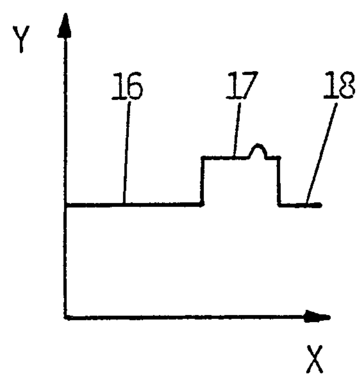


FIG.4A

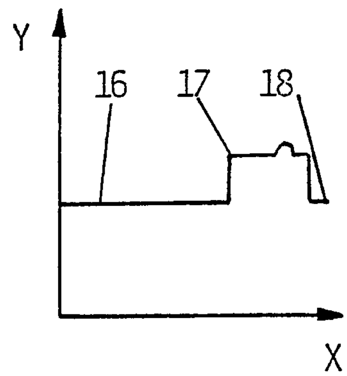


FIG.4B

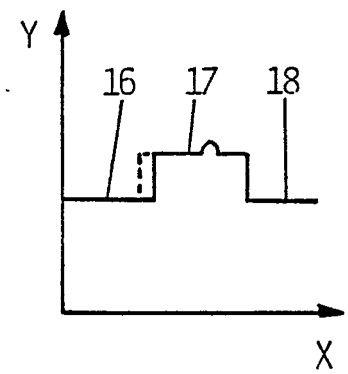


FIG.4C

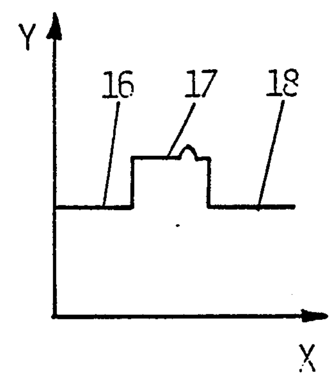


FIG.4D

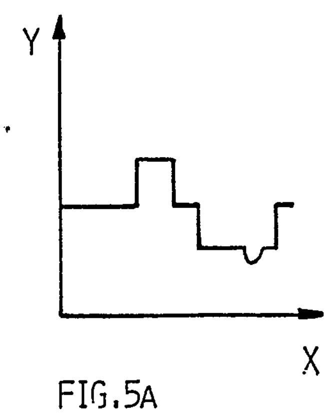


FIG.5A

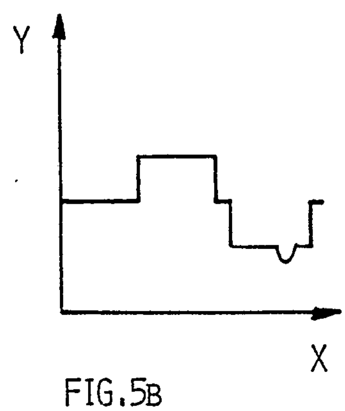


FIG.5B

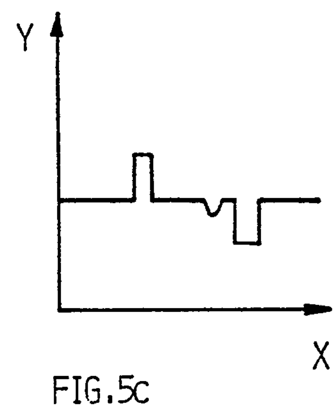


FIG.5C

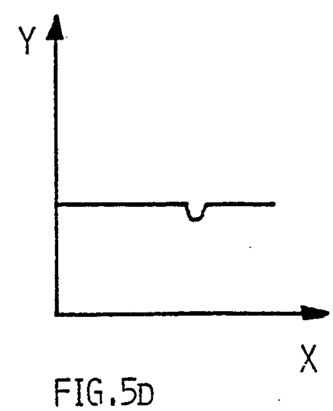


FIG.5D

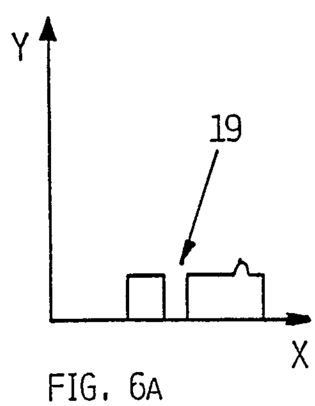


FIG. 6A

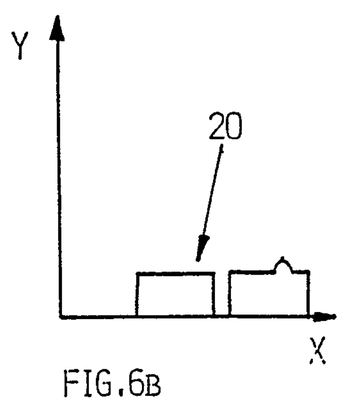


FIG.6B

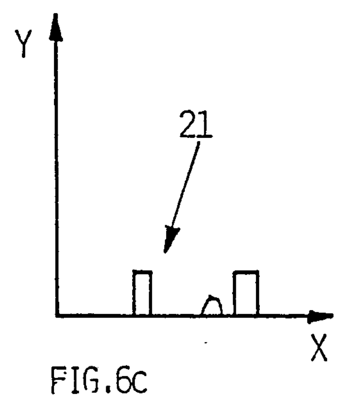


FIG.6C

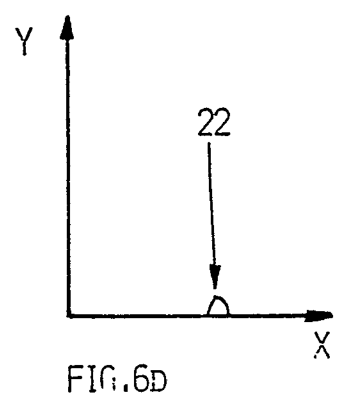


FIG.6D

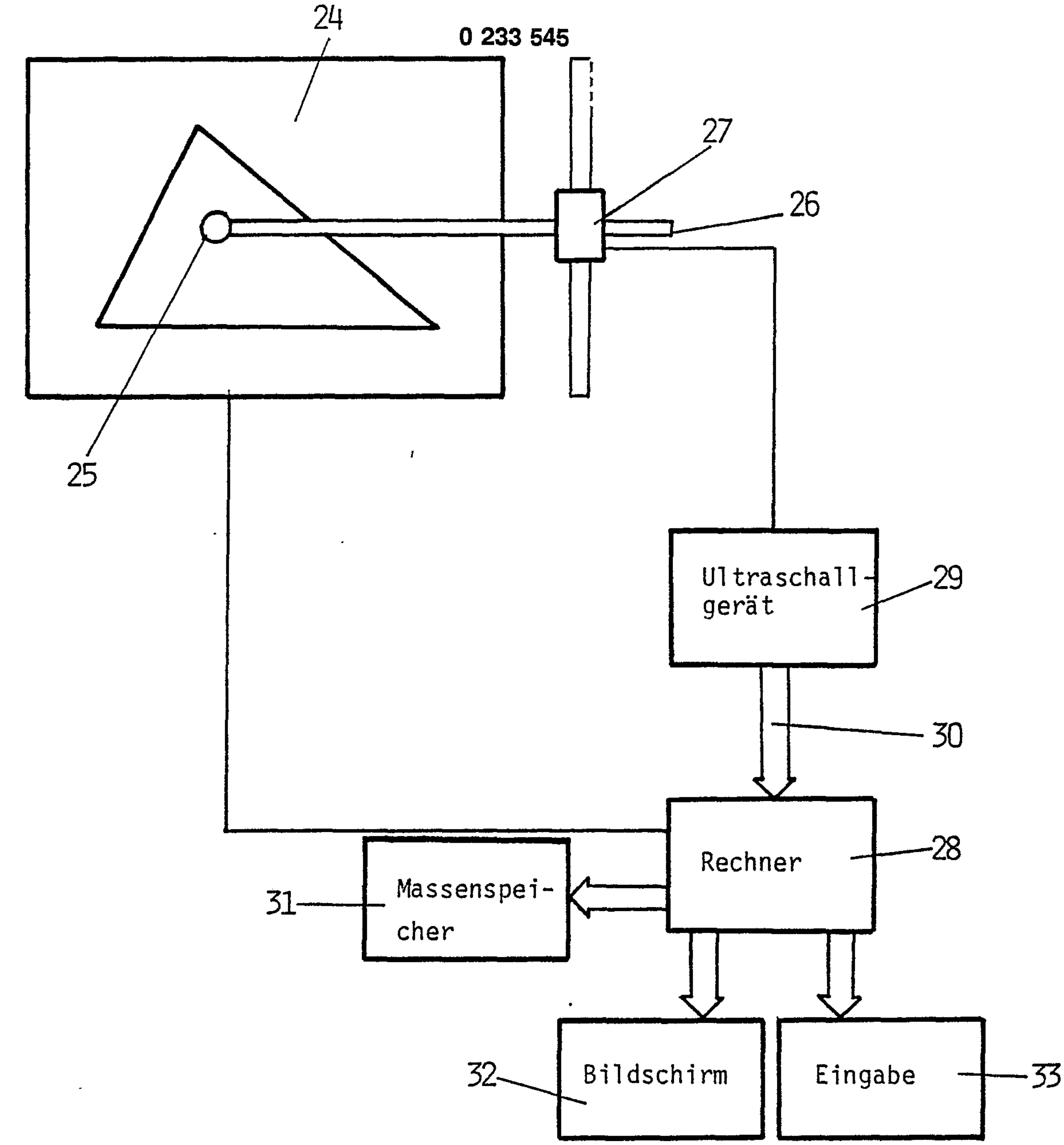


FIG. 8

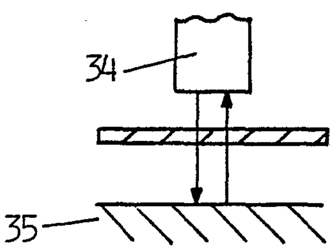


FIG. 9A

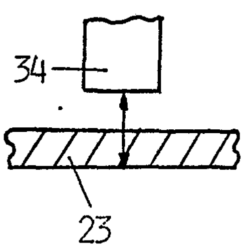


FIG.9B

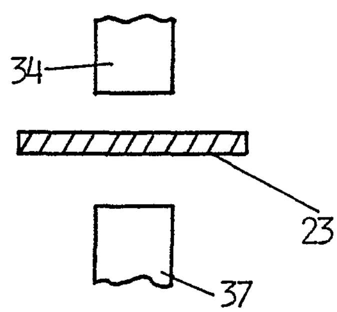


FIG.9C